# FASCICULE DE BREVET EUROPEEN

(11) **EP 3 301 328 B1**
(45) Date de publication et mention de la délivrance du brevet: **04.11.2020**
(21) Numéro de dépôt: 17189775.4
(22) Date de dépôt: 07.09.2017
(51) Int. Cl.: F16H 35/10, F16H 25/24, F16D 67/00, F16H 25/20, F16H 35/00, F16D 127/00

(54) **DISPOSITIF DE DÉRIVATION D'EFFORT ET ACTIONNEUR MÉCANIQUE COMPRENANT UN TEL DISPOSITIF**
VORRICHTUNG ZUR KRAFTUMLENKUNG, UND MECHANISCHES STELLGLIED, DAS EINE SOLCHE VORRICHTUNG UMFASST
FORCE-SHUNTING DEVICE AND MECHANICAL ACTUATOR COMPRISING SUCH A DEVICE

(30) Priorité: 08.09.2016 FR 1658353
(43) Date de publication de la demande: 04.04.2018
(73) Titulaire: LORD Solutions France, 26600 Pont-de-l'Isère (FR)
(72) Inventeur: ROUSSEY, Bastien, 26600 TAIN L'HERMITAGE (FR)
(74) Mandataire: Delorme, Nicolas

(56) Documents cités:
- DE-U1- 20 313 920
- FR-A1- 2 896 300
- FR-A1- 3 017 600

## Description

La présente invention concerne un dispositif de dérivation d'effort, ainsi qu'un actionneur mécanique comprenant un tel dispositif.

L'invention se rapporte au domaine général des actionneurs mécaniques axiaux, et en particulier lorsqu'ils sont mis en oeuvre dans le domaine de l'aéronautique. Sur de nombreux aéronefs, du genre avion ou hélicoptère, sont installés différents types d'actionneurs mécaniques axiaux permettant de commander la position ou l'orientation de différents dispositifs mécaniques, par exemple des surfaces aérodynamiques de vol, ou des trains d'atterrissage rétractables. Dans certains cas, notamment dans le cas d'un mécanisme de train d'atterrissage, il est nécessaire de prévoir un moyen pour verrouiller les actionneurs dans une position précise. En effet les efforts fournis par l'actionneur axial lors du déploiement ou du repli du train d'atterrissage sont inférieurs aux efforts auxquels le train d'atterrissage doit faire face une fois déployé, notamment au moment même de l'atterrissage, ou simplement pour supporter le poids de l'aéronef.

Les moyens de verrouillage connus des actionneurs mécaniques axiaux nécessitent d'être commandés ou pilotés par un circuit de commande électrique ou électromécanique, afin de venir bloquer mécaniquement, sur commande, l'actionneur axial lorsqu'il est à l'arrêt ou dans une position particulière. La mise en oeuvre d'un tel dispositif piloté impose l'installation, la configuration et l'entretien de moyens de pilotage, ce qui représente un certain coût et est une source de pannes potentielles.

Théoriquement, il serait alternativement possible de prévoir un actionneur mécanique axial apte à résister à des efforts élevés, et en particulier pour résister à tous les efforts extérieurs susceptibles d'être appliqués sur l'actionneur mécanique, en mouvement comme à l'arrêt de ce dernier. Cependant, il serait nécessaire dans ce cas de prévoir un actionneur « surdimensionné » qui, pour résister à de tels efforts extérieurs, présente un coût, une masse et une consommation d'énergie élevés, ce qui n'est pas souhaitable pour un équipement d'aéronef.

FR 3 017 600 A1 décrit un actionneur comprenant une structure fixe et un élément d'actionnement mobile par rapport à la structure fixe. L'actionneur comprend également un dispositif de blocage en position de l'élément d'actionnement, monté sur la structure fixe et présentant un état de blocage et un état de libération de l'élément d'actionnement. Le dispositif de blocage comprend, en série, un limiteur d'effort et des éléments de blocage agencés pour être mis en appui par arc-boutement. Toutefois cet actionneur connu présente une structure relativement complexe et est seulement adapté au cas où l'actionneur comprend un rotor rotatif.

Le but de l'invention est par conséquent de proposer un nouveau dispositif de dérivation d'effort ainsi qu'un nouvel actionneur mécanique comprenant un tel dispositif, qui permette d'obtenir, de manière fiable et économique, une limitation ou un blocage des efforts qui s'appliquent sur l'actionneur mécanique, sans avoir recours à un moyen de pilotage de cette limitation ou de ce blocage.

A cet effet l'invention a pour objet un dispositif de dérivation d'effort, comprenant :
- un tube qui s'étend le long d'un axe principal et qui présente une paroi interne de friction sensiblement cylindrique,
- un premier organe qui est monté coulissant au sein du tube le long de l'axe principal,
- au moins une jambe primaire disposée à l'oblique par rapport à l'axe principal, et incluant une extrémité interne par l'intermédiaire de laquelle elle est attachée au premier organe, et une extrémité externe formant un patin primaire, qui est en contact de friction avec la paroi interne, l'extrémité interne étant disposée en amont du patin primaire en considération d'une première direction parallèle à l'axe principal, de sorte que, lorsqu'un premier effort externe est appliqué selon la première direction sur le premier organe, la jambe primaire entre en friction ou en arc-boutement contre la paroi interne par l'intermédiaire de son patin primaire, le tube reprenant ainsi une fraction seulement du premier effort externe par friction du patin primaire contre la paroi interne, ou la totalité du premier effort externe par arc-boutement de la jambe primaire, et
- un deuxième organe qui est monté au sein du tube, coulissant le long de l'axe principal, et qui est lié en entraînement au premier organe, et qui est solidairement pourvu d'au moins un élément d'entraînement, pour entraîner le patin primaire de manière à réduire la friction de ce dernier sur la paroi interne, sous l'application d'un deuxième effort externe sur le deuxième organe selon la première direction, pour désamorcer la friction ou l'arc-boutement de la jambe primaire.

Une des idées à la base de l'invention est de prévoir d'accoupler le dispositif de dérivation d'effort d'une part à un vérin par l'intermédiaire du deuxième organe, et d'autre part à un récepteur d'action mécanique, tel que par exemple un train d'atterrissage, accouplé au premier organe, afin de protéger le vérin d'éventuels efforts ayant des valeurs importantes, qui pourraient s'appliquer sur le récepteur d'action mécanique. Pour cela, lorsque le récepteur d'action mécanique reçoit le premier effort externe, et le transmet au premier organe, le dispositif répartit l'effort reçu au niveau du premier organe entre d'une part le deuxième organe connecté à l'actionneur et d'autre part le tube, qui est par exemple connecté à un deuxième récepteur d'action mécanique dont la résistance aux efforts est plus élevée que celle du vérin. Ainsi, notamment dans le cas où le premier effort est particulièrement élevé, le dispositif reporte tout ou partie du premier effort externe sur le tube plutôt que sur le deuxième organe, afin de protéger le vérin. Le dispositif de l'invention est conçu de manière à ce que cette dérivation de l'effort vers le tube s'effectue automatiquement, de façon mécanique et systématique, par arcboutement ou friction de la jambe primaire contre le tube. Enfin, la conception du dispositif est telle que le vérin peut librement exercer un effort sur le premier organe, et donc sur le récepteur mécanique d'effort, par l'intermédiaire du deuxième organe. En effet, le dispositif utilise le deuxième effort externe appliqué par le moteur pour réduire la friction de la jambe primaire sur le tube.

Bien entendu, il est possible d'intégrer le dispositif de dérivation d'effort à tout système mécanique : en particulier, le dispositif de dérivation d'effort n'est pas nécessairement accouplé à un vérin et à un récepteur d'action mécanique. Pour l'utilisation du dispositif de dérivation d'effort, la présence du vérin, du récepteur d'action mécanique, ou plus généralement d'un système mécanique externe au dispositif de dérivation d'effort, est préférentielle et donc facultative. Le dispositif de dérivation d'efforts peut également trouver d'autres applications que celles mentionnées dans le présent document, notamment des applications qui ne concernent pas le domaine de l'aéronautique.

De cette façon, un actionneur mécanique équipé d'un tel dispositif est à la fois fiable, peu coûteux, peu encombrant et sécuritaire, le dispositif n'étant notamment pas sujet à des pannes d'origine électromécanique.

Suivant des caractéristiques additionnelles avantageuses du dispositif de l'invention, prises isolément ou suivant toutes les combinaisons techniquement possibles :
- l'élément d'entraînement est conçu pour avoir tendance à entraîner, ou pour entraîner, le patin primaire à l'écart de la paroi interne lorsque le deuxième effort externe est appliqué sur le deuxième organe.
- le deuxième organe forme une bague coaxiale avec l'axe principal, l'élément d'entraînement formant une patte qui s'étend sensiblement parallèlement par rapport à l'axe principal, et par l'intermédiaire de laquelle la bague est attachée à la jambe primaire.
- l'élément d'entraînement est conçu pour venir en appui contre la jambe primaire dans la première direction.
- le premier organe forme un cylindre creux qui est coaxial avec l'axe principal, le deuxième organe étant mobile en translation selon l'axe principal au sein du cylindre creux, ce dernier étant pourvu de deux butées délimitant une course de translation du deuxième organe par rapport au premier organe, et par l'intermédiaire desquelles le deuxième organe peut entraîner le premier organe en translation le long de l'axe principal par rapport au tube.
- la jambe primaire est élastiquement déformable et est montée de façon à pouvoir maintenir le patin primaire en contact avec la paroi interne par élasticité.
- l'extrémité interne de la jambe primaire comprend une liaison pivot élastique par laquelle elle est attachée avec le premier organe, autour d'un axe de pivot qui est sensiblement ortho-radial à l'axe principal, la liaison pivot élastique permettant de maintenir le patin primaire en contact avec la paroi interne par élasticité.
- au moins deux jambes primaires sont réparties autour de l'axe principal.
- le dispositif comprend au moins une jambe secondaire disposée à l'oblique par rapport à l'axe principal, la jambe secondaire incluant une extrémité interne par l'intermédiaire de laquelle elle est attachée au premier organe, et une extrémité externe formant un patin secondaire, qui est en contact de friction avec la paroi interne, l'extrémité interne étant disposée en aval du patin secondaire en considération de la première direction, de sorte que, lorsqu'un troisième effort externe est appliqué en opposition de la première direction sur le premier organe, la jambe secondaire entre en friction ou en arc-boutement contre la paroi interne par l'intermédiaire de son patin secondaire, le tube reprenant ainsi une fraction seulement du troisième effort externe par friction du patin secondaire de la jambe secondaire contre la paroi interne, ou la totalité du troisième effort externe par arc-boutement de la jambe secondaire, le deuxième organe incluant un élément d'entraînement secondaire qui est solidaire du deuxième organe, pour entraîner le patin secondaire de manière à réduire la friction de ce dernier sur la paroi interne, sous l'application d'un quatrième effort externe sur le deuxième organe selon une direction opposée à la première direction, pour désamorcer la friction ou l'arc-boutement de la jambe secondaire.

L'invention a également pour objet un actionneur mécanique comprenant un dispositif de dérivation d'effort tel que défini ci-avant, et un vérin accouplé au deuxième organe afin de pouvoir entraîner ce dernier le long de l'axe principal par rapport au tube.

L'invention sera mieux comprise à la lecture de la description qui va suivre, donnée uniquement à titre d'exemple non limitatif et non exhaustif, et faite en se référant aux dessins dans lesquels :
- la figure 1 est une vue en perspective d'une coupe longitudinale d'un dispositif de dérivation d'effort selon un premier mode de réalisation conforme à l'invention ;
- la figure 2 est une vue en perspective, sous le même angle que la figure 1, d'une partie seulement du dispositif de la figure 1 ;
- la figure 3 et 4 sont des coupes longitudinales partielles du dispositif de la figure 1, montrant respectivement différentes situations d'application d'efforts ;
- la figure 5 est une coupe longitudinale partielle d'un dispositif d'un dispositif de dérivation selon un deuxième mode de réalisation conforme à l'invention ;
- la figure 6 est une coupe longitudinale d'un troisième mode de réalisation d'un dispositif conforme à l'invention.

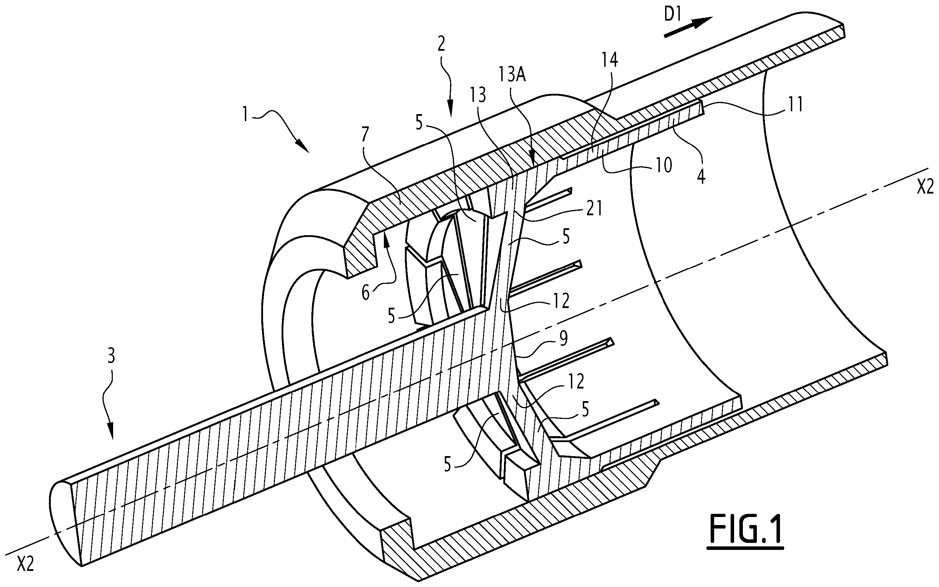

Sur la figure 1 est représenté un dispositif de dérivation d'effort 1 qui comprend un tube 2, un premier organe 3, un deuxième organe 4 et une pluralité de jambes primaires 5. L'exemple de réalisation de la figure 1 sera pris dans le contexte d'un aéronef,, et plus précisément dans le cas où le dispositif 1 est mis en oeuvre dans un mécanisme de déploiement et de repli du train d'atterrissage de l'aéronef.

Le tube 2 s'étend le long d'un axe principal X2, qui forme préférentiellement son axe de révolution. Le tube 2 forme ainsi par exemple une manche annulaire dont l'axe est coaxial avec l'axe principal X2. Le tube 2 présente une paroi interne 6, qui est elle-même préférentiellement de forme cylindrique coaxiale avec l'axe principal X2, mais pour laquelle il est également envisageable qu'elle présente une forme prismatique ou tronconique. La paroi interne 6 forme une paroi de friction et est donc formée par un matériau résistant au frottement, par exemple un matériau métallique. Le tube 2 présente une construction générale qui permet à la paroi interne 6 de résister à des efforts de friction, et à des efforts radiaux par rapport à l'axe principal X2. Pour cela, le tube 2 comprend avantageusement un contrefort de paroi 7, c'est-à-dire une surépaisseur locale de la paroi du tube 2, afin que la paroi interne 6 résiste à d'éventuels efforts radiaux appliqués à son encontre.

Le tube 2 forme avantageusement le carter du dispositif 1, par l'intermédiaire duquel le dispositif 1 sera monté au sein d'un système mécanique, et en particulier au sein d'un actionneur mécanique incluant le dispositif 1 et un vérin, non représenté sur les figures, accouplé à celui-ci. Dans le cas d'exemple de l'aéronef précité, le tube 2 pourra être connecté de façon solidaire au châssis de l'aéronef, ou pour le moins à un support sur lequel un actionneur du train d'atterrissage est lui-même monté, cet actionneur étant par exemple formé par un vérin. Selon la configuration représentée aux figures, le dispositif 1 est intégré au vérin, le tube 2 formant alors le carter du vérin. De préférence, le vérin comprend un moteur à axe rotatif qui n'est pas illustré pour des raisons de simplification, et un moyen de transformation, non illustré, du mouvement rotatif de l'axe du moteur en mouvement de translation, par exemple un système vis-écrou.

Le premier organe 3 s'étend le long de l'axe principal X2, et inclut une première extrémité d'accouplement 8, cette dernière étant disposée en amont de la deuxième extrémité 9 en considération de la direction D1 représentée à la figure 1, la direction D1 étant définie parallèlement à l'axe principal X2.

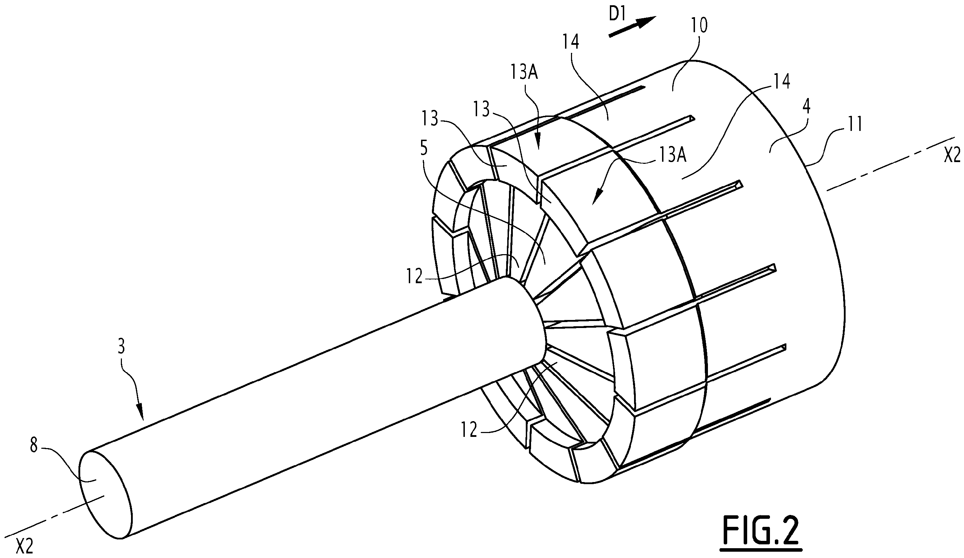

Tel qu'illustré aux figures 1 et 2, le premier organe 3 forme préférentiellement une tige, qui est par exemple réalisée dans une matière métallique, et qui est conçue pour résister à des efforts de traction et de compression le long de l'axe principal X2. Cette tige forme en pratique la tige du vérin. La tige est coaxiale avec l'axe principal X2. Alternativement à une tige, le premier organe 3 pourra former un cylindre creux ou une forme extrudée le long de l'axe principal X2.

En pratique, le premier organe 3 est conçu pour être accouplé à un récepteur d'effort, non représenté aux figures, et qui sera destiné à recevoir des efforts de la part du vérin par l'intermédiaire du dispositif 1. Dans le cas d'exemple de l'aéronef précité, le récepteur d'effort pourra former le train d'atterrissage de l'aéronef.

Le deuxième organe 4 du dispositif 1 est représenté à la figure 1 ainsi qu'à la figure 2, sur laquelle il est particulièrement visible. Le deuxième organe 4 forme préférentiellement une bague coaxiale avec l'axe principal X2 et dont le diamètre est plus élevé que celui de la tige formant le premier organe 3. Le deuxième organe 4 présente ainsi avantageusement une forme annulaire, et inclut une première extrémité 10, de forme circulaire, ainsi qu'une deuxième extrémité d'accouplement 11, également de forme circulaire entre lesquelles le deuxième organe 4 s'étend.

En pratique, le deuxième organe 4 est destiné à être accouplé avec le vérin susmentionné, en particulier par l'intermédiaire de la deuxième extrémité d'accouplement 11. En pratique, la deuxième extrémité d'accouplement 11 est directement connectée au moyen de transformation de mouvement susmentionné du vérin, et en particulier à l'écrou du système vis-écrou susmentionné. Le vérin ainsi accouplé au deuxième organe 4 peut entraîner ce dernier le long de l'axe principal X2 selon un mouvement de translation. Dans la première direction D1, et également de façon opposée à la première direction D1. Dans l'exemple de l'aéronef précité, le vérin ainsi accouplé au deuxième organe 4 permet d'entraîner le train d'atterrissage lui-même connecté au premier organe 3. Le deuxième organe 4 étant conçu pour être accouplé au vérin, il est préférentiellement réalisé dans une matière apte à résister aux efforts de traction et de compression le long de l'axe principal X2 provenant en particulier du vérin, et est par exemple réalisé dans une matière métallique.

On comprend que la forme de la première extrémité d'accouplement 8 ainsi que celle de la deuxième extrémité d'accouplement 11 peuvent être adaptées ou prolongées par rapport aux formes représentées sur les figures 1 et 2 en fonction des moyens d'accouplement réciproques respectivement du récepteur d'effort, formé en particulier par le train d'atterrissage, et du vérin susmentionné.

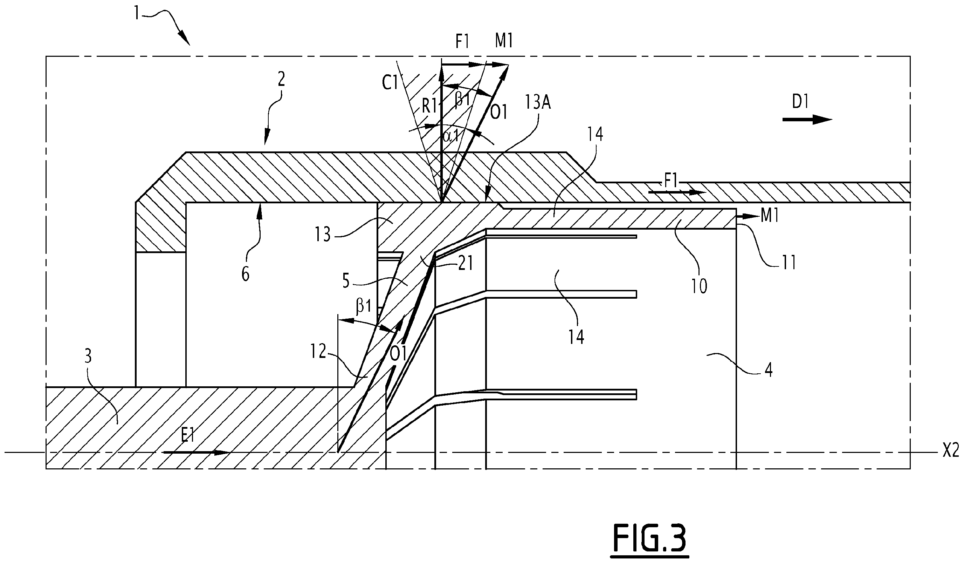

Chaque jambe primaire 5 du dispositif 1 est disposée à l'oblique par rapport à l'axe principal X2 et inclut une extrémité interne 12 et une extrémité externe formant un patin primaire 13. L'extrémité interne 12 est disposée en amont du patin primaire 13 en considération de la direction D1, de sorte que la jambe primaire 5 forme un angle obtu avec l'axe principal X2. Tel que décrit dans ce qui suit, le patin primaire 13 est en appui contre la paroi interne 6 selon un effort oblique O1 représenté à la figure 3, de sorte que l'on conçoit le patin 13 et la jambe 5 pour que le point d'intersection entre un axe coaxial avec l'effort oblique O1 et la paroi interne 6 soit disposé en aval de l'extrémité interne 12. De façon approximative, c'est ainsi l'extrémité externe de la jambe 5 qui est en aval de l'extrémité interne 12. La jambe primaire 5 surmontée du patin primaire 13 présente avantageusement une forme de marteau, le patin primaire 13 s'étendant parallèlement à l'axe principal X2 de part et d'autre du corps de cette jambe primaire 5. D'autres formes que la forme de marteau susmentionnée peuvent être envisagées, en fonction notamment de la répartition des efforts appliqués sur le patin primaire 13.

Le patin primaire 13 est pourvu, sur son côté tourné à l'opposé de l'axe principal X2, d'une surface de friction 13A prévue pour être translatée et frottée en translation selon l'axe principal X2. En pratique, la surface de friction 13A du patin primaire 13 forme une portion de cylindre ou de cône coaxiale avec l'axe principal X2, et dont le centre de gravité géométrique est centré sur le point d'intersection entre l'axe coaxial à l'effort oblique O1, décrit ci-après, et la paroi interne 6.

Chaque jambe primaire 5 est élastiquement déformable, de préférence au moins à son extrémité interne 12, voire également à la base 21 du patin 13.. Cette propriété peut être par exemple obtenue en concevant la jambe primaire 5 selon une géométrie propice à sa déformation élastique, en particulier à l'extrémité interne 12 et/ou à la base 21, en l'espèce selon laquelle la jambe primaire 5 est d'une épaisseur moindre à l'extrémité interne 12 et/ou à la base 21. Selon cette configuration, la jambe primaire 5 peut être réalisée dans une matière métallique qui peut se déformer élastiquement, tout en étant résistante et durable. Le caractère élastiquement déformable de la jambe primaire 5 lui permet de présenter une tendance à la flexion élastique lorsque le patin primaire 13 est soumis à des efforts de friction qui sont dirigés parallèlement à l'axe principal X2. En présence de tels efforts de friction, la jambe primaire 5 a tendance à s'écarter de sa configuration initiale, ou pour le moins à modifier l'effort radial appliqué via le patin primaire 13 sur la paroi interne 6, et est conçue pour revenir par élasticité dans cette configuration initiale, en l'absence des efforts de friction, et ainsi rétablir l'effort radial initialement appliqué. En pratique, le patin primaire 13 est conçu pour rester en contact avec la paroi interne 6, avec une friction plus ou moins élevée en fonction de l'application des efforts axiaux sur le premier organe 3 et le deuxième organe 4, les jambes primaires 5 étant conçues pour convertir une partie de ces efforts axiaux en efforts radiaux appliqués sur le patin primaire 13, par flexibilité des jambes primaires 5.

Si le dispositif 1 est représenté aux figures 1 et 2 avec douze jambes primaires 5, il peut toutefois comporter davantage de jambes primaires, ou un nombre inférieur de jambes primaires, par exemple deux jambes primaires. Dans le cas où le dispositif 1 est pourvu d'une pluralité de jambes primaires 5, ces dernières sont réparties autour de l'axe principal X2, de façon régulière et forment conjointement une jupe flexible dont la périphérie extérieure est formée par la succession des patins primaires 13, comme cela est visible à la figure 2. Cet agencement des patins primaires 13 conduit à ce que les surfaces de friction 13A de ces derniers forment conjointement une enveloppe cylindrique de friction. La partie interne de la jupe précitée est quant à elle formée par un agencement circulaire des extrémités internes 12 des jambes primaires 5. De préférence, les extrémités internes 12 sont situées à la même hauteur le long de l'axe principal X2. De la même façon, les patins primaires 13 sont situés à la même hauteur le long de l'axe principal X2.

Le premier organe 3 est monté coulissant au sein du tube 2 le long de l'axe principal X2. De cette manière, le premier organe 3 peut être translaté par rapport au tube 2 le long de l'axe principal X2. Le récepteur d'effort, qui est par exemple formé par le train d'atterrissage, est ainsi destiné à recevoir des efforts de traction ou de poussée de la part du premier organe 3, ces efforts étant appliqués par rapport au tube 2, lequel forme un référentiel mécanique. Les jambes primaires 5 sont attachées au premier organe 3 par l'intermédiaire de leur extrémité interne 12, au niveau de la deuxième extrémité 9 du premier organe 3. La tige formant le premier organe 3 est ainsi prolongée par la jupe précitée le long de l'axe principal X2, la pluralité de jambes primaires 5 formant un cône coaxial avec l'axe principal X2, dont le sommet est formé par la deuxième extrémité 9 du premier organe 3, le cône se développant dans la direction D1.

Les patins primaires 13, tel que cela est visible à la figure 1, sont quant à eux en contact, par leur surface 13A, avec la paroi interne 6 du tube 2. Ainsi, lors du coulissage du premier organe 3 le long de l'axe principal X2 et par rapport au tube 2, les surfaces de friction 13A des patins 13 frottent ou adhèrent sur la paroi interne 6. Le contact en question est donc un contact dit de « friction ».

Les efforts de friction s'appliquant tangentiellement sur le patin primaire 13 ont tendance à entrainer en rotation la jambe primaire 5 autour de son extrémité interne 12, ce qui a pour effet de :
- resserrer le contact entre le patin primaire 13 et la paroi interne 6 lorsque le l'effort de friction est orienté de façon opposée à la première direction D1,
- desserrer le contact entre le patin primaire 13 et la paroi interne 6 lorsque le l'effort de friction est orienté selon la première direction D1.

On comprend que la jambe primaire 5 ne se déplace pas, en pratique, en rotation autour de son extrémité interne 12, mais applique simplement un effort plus ou moins important sur le patin primaire 13 en fonction des efforts de friction tangentiels qui s'exercent sur ce dernier. Le caractère élastiquement déformable des jambes primaires 5 permet de maintenir en contact de friction les patins primaires 13 avec la paroi interne 6 par élasticité des jambes primaires 5. En effet, les jambes primaires sont avantageusement montées de façon à ce que le tube 2 exerce une légère pression sur les patins primaires 13 et à imposer une légère déformation élastique des jambes primaires 5, ces dernières appliquant ainsi en réaction une pression sur la paroi interne 6 par l'intermédiaire des patins primaires 13, de sorte que le contact entre les patins primaires 13 et la paroi interne 6 est maintenu. On comprend que si l'on considère le premier organe 3 dans une configuration où il est séparé du tube 2 comme illustré à la figure 2, la distance qui sépare l'axe X2 de la surface 13A, mesurée radialement par rapport à l'axe X2, est supérieure à la distance séparant les mêmes éléments et mesurée par rapport au même axe lorsque le premier organe 3 est dans une configuration où il est monté au sein du tube 2 comme illustré à la figure 1.

Le deuxième organe 4 est quant à lui monté coulissant au sein du tube 2 le long de l'axe principal X2. Le deuxième organe 4, tel que cela est visible aux figures 1 et 2, est lié en entraînement au premier organe 3. Dans l'exemple représenté aux figures 1 et 2, le deuxième organe 4 est solidairement pourvu de pattes 14, lesquelles sont également liées chacune à l'une des jambes primaires 5. Chaque patte 14 s'étend préférentiellement dans le prolongement du patin primaire 13 et forme une portion de cylindre creux coaxial avec l'axe principal X2. Chaque patte 14 est légèrement en retrait vers l'intérieur, c'est-à-dire en direction de l'axe principal X2, par rapport au patin primaire 13, de sorte que la surface de friction 13A du patin primaire 13 est légèrement saillante par rapport à la patte 14.

Les pattes 14 forment en pratique des éléments d'entraînement du patin primaire 13 par le deuxième organe 4. Ainsi, ce dernier est lié au premier organe 3 par l'intermédiaire des jambes primaires 5 et des pattes 14. En d'autres termes, la liaison entre le premier organe 3 et le deuxième organe 4 est assurée par la jupe susmentionnée. Le vérin accouplé au deuxième organe 4 peut ainsi entraîner le premier organe 3 en translation selon l'axe principal X2 par rapport au tube 2 qui forme le référentiel mécanique.

Le deuxième organe 4, formant une bague, est avantageusement dans le prolongement des pattes 14 de manière à ne pas entrer en contact avec la paroi interne 6. Le deuxième organe 4 relie les jambes primaires 5 entre elles, par l'intermédiaire de leur patin 13 respectif.

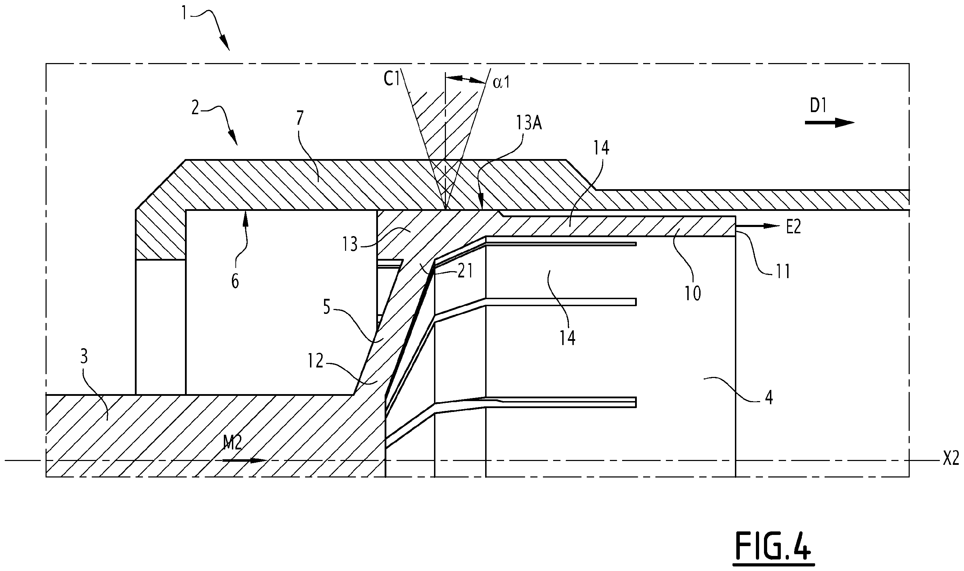

Lorsqu'un premier effort externe E1, visible à la figure 3, est appliqué selon la première direction D1 sur le premier organe 3, par exemple par l'intermédiaire de la première extrémité d'accouplement 8, les jambes primaires 5 entrent en friction contre la paroi interne 6 par l'intermédiaire des patins primaires 13 contre la paroi interne 6 sans toutefois s'arc-bouter. Cette friction se traduit par un frottement des patins primaires 13 le long de la paroi interne 6, le premier organe 3 étant en mouvement par rapport au tube 2 selon la direction D1. On peut déterminer par le calcul un cône de frottement C1 du patin 13 sur la paroi interne 6, le cône C1 présentant un angle α1, tel qu'illustré aux figures 3 et 4. On peut démontrer par le calcul que la valeur de l'angle α1 ce cône de frottement C1 dépend de la géométrie du premier organe 3, et en particulier des jambes 5, ainsi que du coefficient de frottement du patin 13 contre la paroi interne 6. On peut également démontrer par le calcul que la valeur de l'angle α1 ne dépend pas, ou peu, de la valeur des efforts externes appliqués sur le premier organe 3 ou le deuxième organe 4, et ne dépend notamment pas de l'effort E1 appliqué sur le premier organe 3. Ce calcul n'est pas détaillé ici dans la mesure où il peut être effectué sur la base de connaissances mécaniques générales, ou à l'aide de logiciels spécialisés.

Le dispositif 1 est ainsi conçu avec une géométrie, un état de la surface 13A et de la paroi 6, ainsi que des matériaux, dont les caractéristiques permettent de définir la valeur de l'angle α1 du cône C1 pour obtenir le fonctionnement qui suit.

Tel que cela est représenté à la figure 3, le premier effort externe E1 est transmis au patin primaire 13 par la jambe primaire 5 sous la forme d'un premier effort oblique O1, qui est dirigé le long de la jambe primaire 5, de façon parallèle à cette dernière, ou pour le moins de façon quasiment parallèle. Le dispositif 1, et notamment les jambes 5, sont conçues pour que l'effort O1 forme un angle β1, dont la valeur est supérieure à celle de l'angle α1, par rapport à une direction centrifuge à l'axe X2, c'est-à-dire qu'il s'étend géométriquement à l'extérieur du cône C1, de sorte que l'organe 3 glisse au sein du tube 2 selon la direction D1. Dans ce fonctionnement, le tube 2 reprend une fraction F1 seulement du premier effort externe E1 par friction des patins primaires 13 contre la paroi interne 6, ce qui est représenté à la figure 3. Une autre fraction M1 de l'effort E1 est transmise au deuxième organe 4, et en particulier à l'extrémité d'accouplement 11. La somme des fractions M1 et F1 est sensiblement égale à la valeur de l'effort E1.

Cet effort oblique O1 présente une composante axiale le long de l'axe principal X2 qui se traduit par un effort de friction du patin primaire 13 sur la paroi interne 6, cet effort de friction formant la fraction F1 du premier effort externe E1 reprise par le tube 2. Le premier effort oblique O1 se décompose également en une première composante radiale R1 qui se traduit par une mise en appui selon une direction centrifuge du patin primaire 13 contre la paroi interne 6. On comprend que la présence de cette première composante radiale R1 est liée à la géométrie oblique de la jambe primaire 5 et à sa capacité à se déformer élastiquement de façon à fléchir dans une direction opposée à la première direction D1, ce qui permet de serrer le patin primaire 13 contre la paroi interne 6, de sorte que la jambe primaire 5 présente une tendance à l'arcboutement, sans toutefois s'arc-bouter.

Ainsi, la valeur de la différence entre les angles β1 et α1, détermine la valeur de la fraction F1 par rapport à celle de la fraction M1. De manière avantageuse, on conçoit le dispositif 1 pour que l'angle β1 soit supérieur à l'angle α1 tout en étant très proche de ce dernier, par exemple que β1 mesure un degré de plus que l'angle α1, de sorte que la valeur de la fraction F1 est très supérieure à la valeur de la fraction M1. En variante, on peut prévoir par exemple que l'angle α1 soit égal à la moitié de l'angle α1, de sorte que la fraction F1 est égale à la valeur de la fraction M1.

On comprend qu'une fraction M1 de la valeur du premier effort externe E1 qui n'est pas reprise par le tube 2 au niveau de la paroi interne 6, est transmise au deuxième organe 4, en particulier par l'intermédiaire des pattes 14. En conséquence, la fraction M1 seulement du premier effort externe E1 est transmis au deuxième organe 4, et donc au vérin auquel ce dernier est accouplé. Le vérin est ainsi protégé des efforts provenant du récepteur d'effort. De plus, lorsque ces efforts sont particulièrement importants tout ou partie de ces efforts sont repris par le tube 2. Dans le cas d'exemple précité de l'aéronef, les efforts dirigés selon la première direction D1 sont répartis entre le vérin et le châssis de l'appareil, duquel le tube 2 est solidaire.

De préférence, le dispositif 1 est conçu et dimensionné de manière que, lors de son utilisation, les jambes primaires 5 ne s'arc-boutent pas, c'est-à-dire pour que l'angle β1 soit supérieur à l'angle α1, afin d'éviter le blocage du dispositif 1. Néanmoins, leur tendance à l'arc-boutement permet au dispositif 1 de transmettre au tube 2 une fraction F1, majoritaire, voire essentielle, de l'effort externe E1. Ainsi, lors d'une utilisation normale du dispositif 1, les jambes primaires 5 sont conçues pour, sous l'action d'un effort externe maximal d'utilisation prédéterminé, dirigé selon D1 et appliqué sur le premier organe 3, être quasiment arc-boutées, afin de transmettre automatiquement une fraction F1 maximale, quasiment égale à la valeur de l'effort E1, de cet effort externe au tube 2 et protéger le vérin, lequel encaisse néanmoins une fraction M1 restante de l'effort externe en question, qui est alors négligeable.

Dans la situation qui est illustrée à la figure 4, un deuxième effort externe E2 est appliqué sur le deuxième organe 4, selon la première direction D1, alors que l'effort E1 susmentionné n'est plus appliqué. L'effort E2 est avantageusement produit par le vérin, non représenté, qui est accouplé au deuxième organe 4, et vise à tracter le récepteur d'effort c'est-à-dire par exemple le train d'atterrissage, qui est accouplé au premier organe 3. On comprend que le deuxième effort externe E2 permet ainsi au deuxième organe 4 d'entraîner les pattes 14 qui entraînent elles-mêmes les jambes primaires 5 par l'intermédiaire des patins primaires 13. Les pattes forment ainsi des éléments d'entraînement des jambes primaires sous l'action du deuxième effort externe E2.

Les éléments d'entraînement formés par les pattes 14 permettent alors, grâce à une tendance à la flexion ou à la rotation des jambes primaires 5 autour de leur extrémité interne 12 respective dans la direction D1, de desserrer légèrement le contact entre les patins primaires 13 et la paroi interne 6, de manière à réduire la pression de contact, et donc la friction entre ces éléments. En entraînant les patins primaires 13 selon la première direction D1, le deuxième organe 4 a ainsi tendance à entraîner les patins primaires 13 à l'écart de la paroi interne 6, sans toutefois de préférence rompre le contact entre ces derniers.

Dans cette situation, les patins primaires 13 appliquent un effort centrifuge par rapport à l'axe X2 sur le tube 2 qui est négligeable ou nul, de sorte que l'effort de friction tangentiel s'appliquant sur la surface 13A est lui-même négligeable ou nul, ou pour le moins très inférieur à la valeur de l'effort de friction tangentiel dans le cas de la figure 3. En conséquence, l'application du deuxième effort externe E2 sur le deuxième organe 4 va à l'encontre de la tendance à l'arc-boutement des jambes primaires 5 contre la paroi interne 6 par desserrage des patins 13, si bien que la friction des jambes primaires 5 est désamorcée. En pratique, l'application du deuxième effort externe E2 sur le deuxième organe 4 permet de contracter légèrement la jupe précitée, de sorte que les patins primaires 13 peuvent glisser selon la première direction D1 le long de la paroi interne 6, tout en restant en contact glissant avec le tube 2. Ainsi, une fraction très faible du deuxième effort externe E2 est reprise par friction par la paroi interne 6, de sorte qu'une fraction M2 maximale, voire quasi-totale, du deuxième effort externe E2 est transmise au premier organe 3, et par conséquent au récepteur d'effort, lequel est avantageusement formé par le train d'atterrissage si l'on se place dans le cas d'exemple précité. Dans cette situation, la friction entre les patins primaires 13 et la paroi interne 6 est quasiment nulle, voire inexistante, et la valeur de la fraction M2 est égale, ou très légèrement inférieure à la valeur de l'effort E2. Dans ce cas, l'organe 3 est déplacé par l'organe 4 selon la direction D1.

Dans un troisième cas, non illustré, où l'on applique un effort externe dirigé selon une direction opposée à la direction D1, sur le deuxième organe 4, et que l'effort E1 susmentionné n'est pas appliqué, on comprend que les jambes primaires 5 présentent une géométrie et une disposition au sein du tube 2 qui ne sont pas favorables à une friction importante, ou un arcboutement, des jambes primaires 5 contre la paroi interne 6, de sorte que, de façon similaire au cas de la figure 4, l'effort de friction tangentiel des patins 13 contre la paroi interne 6 est négligeable. Dans ce troisième cas, la friction est désamorcée, et la quasi-totalité de l'effort externe susmentionné, opposé à D1 et appliqué sur l'organe 4, est transmis à l'organe 3 par l'intermédiaire des jambes 5. Dans ce troisième cas, l'organe 4 déplace l'organe 3 selon une direction opposée à la direction D1 par rapport au tube 2.

Dans un quatrième cas, non illustré, où l'on applique un effort externe dirigé selon une direction opposée à la direction D1, sur le premier organe 3, et que l'effort E2 susmentionné n'est pas appliqué, on comprend que les jambes primaires 5 présentent une géométrie et une disposition au sein du tube 2 qui ne sont pas favorables à une friction importante, ou un arcboutement, des jambes primaires 5 contre la paroi interne 6, de sorte que, de façon similaire au cas de la figure 4, l'effort de friction tangentiel des patins 13 contre la paroi interne 6 est négligeable. Dans ce quatrième cas, la friction est désamorcée, et la quasi-totalité de l'effort externe susmentionné, opposé à D1 et appliqué sur l'organe 3, est transmis à l'organe 4 par l'intermédiaire des jambes 5. Dans ce quatrième cas, l'organe 3 déplace l'organe 4 selon une direction opposée à la direction D1 par rapport au tube 2.

Compte tenu de ce qui précède, le dispositif 1 permet de réduire par forte friction les efforts appliqués selon la première direction D1 sur le premier organe 3, et ce de façon automatique, mécanique, et systématique, sans nécessiter une quelconque forme de pilotage ou de commande, par exemple électronique. Les efforts appliqués sur le deuxième organe 4, par exemple par le vérin, sont quant à eux transmis au premier organe 3, le dispositif 1 n'opposant pas, ou peu, de résistance à cette transmission.

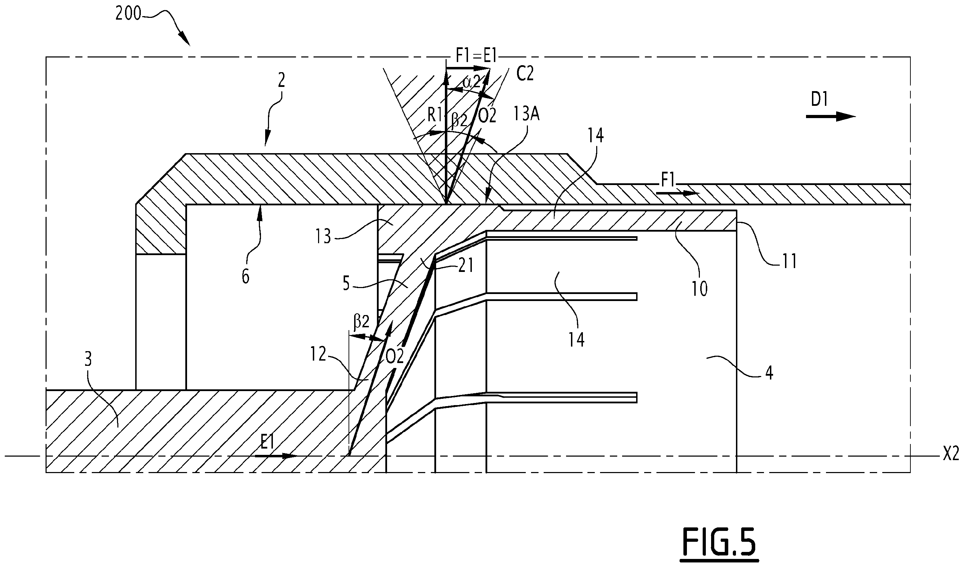

La suite de la description concerne un deuxième mode de réalisation du dispositif 1, qui est représentée à la figure 5, et qui est référencé 200. Sur cette figure 5, sont indiqués par des numéros identiques les éléments qui correspondent à ceux des figures 1 à 5 et décrits dans ce qui précède. Le dispositif de dérivation d'effort 200 comprend le tube 2, un premier organe 3, un deuxième organe 4 et des jambes primaires 5. Seules les différences entre le deuxième mode de réalisation et le premier mode de réalisation sont décrites dans ce qui suit.

Ce dispositif 200 est d'apparence très similaire au dispositif 1 décrit précédemment, mais se différentie de ce dernier en ce que qu'il est conçu pour présenter un cône de frottement C2, en lieu et place d'un cône de frottement C1. Le cône de frottement C2 correspond aux frottements du patin 13 sur la paroi interne 6, et présente un angle α2 qui est supérieur à l'angle α1 décrit précédemment. Comme dans le cas des figures 1 à 4, on peut démontrer par le calcul que la valeur de l'angle α2 ce cône de frottement C2 dépend de la géométrie du dispositif 200, et en particulier de celle du premier organe 3, des jambes 5, ainsi que du coefficient de frottement du patin 13 contre la paroi interne 6. On peut également démontrer par le calcul que la valeur de l'angle α1 ne dépend pas, ou peu, de la valeur des efforts externes appliqués sur le premier organe 3 ou le deuxième organe 4, et ne dépend notamment pas de l'effort E1 appliqué sur le premier organe 3.

Le dispositif 200 est ainsi conçu avec une géométrie, un état de la surface 13A et de la paroi 6, ainsi que des matériaux, dont les caractéristiques permettent de définir la valeur α2 du cône C2 pour obtenir le fonctionnement qui suit.

Tel que cela est représenté à la figure 5, le premier effort externe E1 est transmis au patin primaire 13 par la jambe primaire 5 sous la forme d'un effort oblique O2, qui est dirigé le long de la jambe primaire 5, de façon parallèle à cette dernière, ou pour le moins de façon quasiment parallèle. Le dispositif 200, et notamment les jambes 5, sont conçues pour que l'effort O2 forme un angle β2, dont la valeur est supérieure à celle de l'angle α2, par rapport à une direction centrifuge à l'axe X2, c'est-à-dire que l'angle β2 s'étend géométriquement à l'extérieur du cône C2, de sorte que l'organe 3 est bloqué en translation par adhérence contre le tube 2 selon la direction D1. En pratique, les jambes 5 sont arc-boutées contre la paroi interne 6. Dans ce fonctionnement, le tube 2 reprend une fraction F1, dont la valeur est égale à la totalité du premier effort externe E1, par arc-boutement des patins primaires 13 contre la paroi interne 6, ce qui est représenté à la figure 5. Dans ce cas, l'effort E1 n'est pas transmis au deuxième organe 4, et en particulier à l'extrémité d'accouplement 11, mais est intégralement repris par le tube 2. La valeur de l'effort E1 est égale à la valeur de l'effort de friction tangentiel de la surface 13A contre la paroi 6.

Cet effort oblique O2 présente une composante axiale le long de l'axe principal X2 qui se traduit par un effort de friction tangentiel du patin primaire 13 sur la paroi interne 6, cet effort de friction formant la fraction F1 du premier effort externe E1 reprise par le tube 2. Dans le cas de cette deuxième variante, la fraction F1 est égale à l'effort E1. L'effort oblique O2 se décompose également en une première composante radiale R1 qui se traduit par une mise en appui selon une direction centrifuge du patin primaire 13 contre la paroi interne 6. On comprend que la présence de cette première composante radiale R1 est liée à la géométrie oblique de la jambe primaire 5 et à sa capacité à se déformer élastiquement de façon à fléchir dans une direction opposée à la première direction D1, ce qui permet de serrer le patin primaire 13 contre la paroi interne 6, de sorte que la jambe primaire 5 s'arc-boute.

Quelle que soit la valeur de la différence entre les angles β2 et α2, tout l'effort E1 est repris par le tube 2, de sorte que l'organe 3 est bloqué dans le tube 2 et fixé par rapport à ce dernier.

On comprend que le fonctionnement du dispositif 200 est le même que celui du dispositif 1 du premier mode de réalisation illustré aux figures 1 à 4, dans les cas suivants :
- un effort externe est appliqué selon la direction D1 sur l'organe 4, ce qui entraîne le desserrement des patins 13 pour réduire la friction de ces derniers contre la paroi 6, ce qui désamorce l'arc-boutement des jambes 5 et autorise un déplacement quasiment libre des organes 3 et 4 selon la direction D1 ;
- un effort externe est appliqué en opposition par rapport à la direction D1 sur l'organe 4 ; et
- un effort externe est appliqué en opposition par rapport à la direction D1 sur l'organe 3.

Ainsi, le dispositif 200 transmet au tube 2 la totalité des efforts externes appliqués selon la direction D1 sur le premier organe 3, sans les transmettre au deuxième organe 4, et ce de façon automatique, mécanique, et systématique, sans nécessiter une quelconque forme de pilotage ou de commande, par exemple électronique. Les efforts externes appliqués sur le deuxième organe 4, par exemple par le vérin, sont quant à eux transmis au premier organe 3, le dispositif 1 n'opposant pas, ou peu, de résistance à cette transmission.

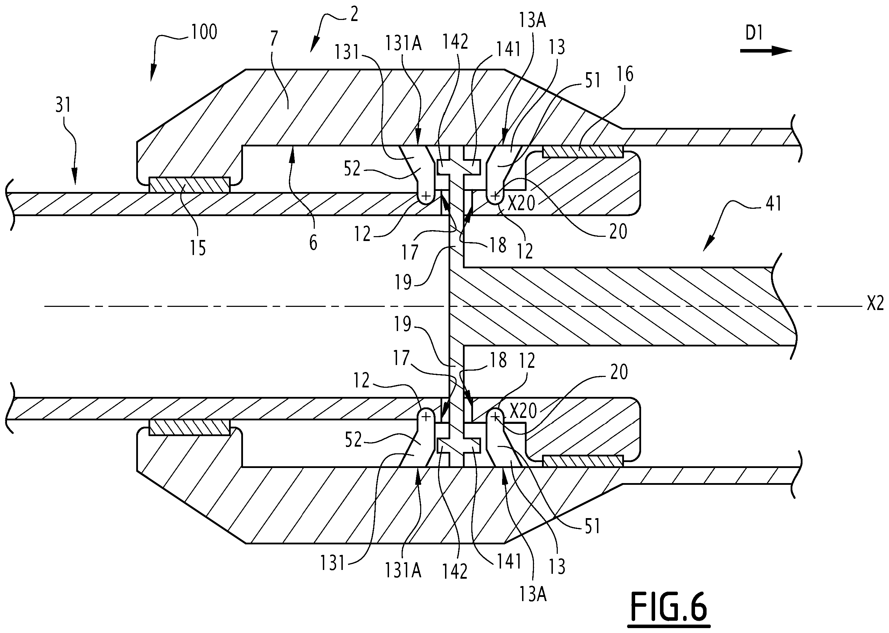

La suite de la description concerne un troisième mode de réalisation du dispositif 1, qui est représentée à la figure 6, et qui est référencé 100. Sur cette figure, sont indiqués par des numéros identiques les éléments qui correspondent à ceux des figures 1 à 5 et décrits dans ce qui précède. Le dispositif de dérivation d'effort 100 comprend le tube 2, un premier organe 31, un deuxième organe 41 et des jambes primaires 51. Les caractéristiques de ce troisième mode de réalisation peuvent être combinées avec celles des premier et deuxième modes de réalisation des figures 1 à 5.

Dans le cas de la figure 6, le premier organe 31 forme un cylindre creux qui est coaxial avec l'axe principal X2, et qui est monté à coulissement le long de l'axe principal X2 au sein du tube 2, par exemple par l'intermédiaire d'un palier amont 15 qui permet de guider le premier organe 31 sur une partie intermédiaire de celui-ci. Un palier aval 16, qui est par exemple monté à une extrémité du premier organe 31 au sein du tube 2, est par exemple en contact glissant en translation parallèlement à l'axe principal X2 avec la paroi interne 6.

Le deuxième organe 41, qui, tel qu'illustré à la figure 6, forme une tige coaxiale avec l'axe principal X2, est mobile en translation selon l'axe principal X2 au sein du cylindre creux. Ce dernier est pourvu de butées, en l'espèce des butées amont 17 et des butées aval 18, qui délimitent une course de translation du deuxième organe 41 par rapport au premier organe 31 le long de l'axe principal X2. En l'espèce, les butées 17 et 18 sont formées par les bords de deux alésages radiaux qui sont ménagés selon une configuration diamétralement opposée dans la paroi du cylindre creux. Le deuxième organe 41, quant à lui, comprend deux bras radiaux 19, qui font saillie radialement de la tige 41 à l'écart de l'axe principal X2. Les bras radiaux 19 traversant l'alésage radial afin d'être chacun arrêtés, lors de la translation du deuxième organe 41, par les butées 17 et 18. Pour cela, les bords des alésages formant les butées 17 et 18 sont placés l'un de l'autre à une distance selon l'axe principal X2 dont la valeur excède l'épaisseur des bras radiaux 19, de manière à autoriser une translation de ces derniers parallèlement à l'axe principal X2 jusqu'à entrer en contact soit avec la butée 17 soit avec la butée 18, qui délimitent alors la course maximale des bras radiaux 19, et donc du deuxième organe 41. En conséquence, le deuxième organe 41 peut entraîner le premier organe 31 en translation le long de l'axe principal X2 lorsque son les bras radiaux 19 arrivent en butée contre les butées 17 ou contre les butées 18. Bien entendu le premier organe 31 peut également entraîner en translation le deuxième organe 41 par l'intermédiaire des butées 17 et 18.

Chacune des jambes primaires 51 comprend une liaison pivot élastique 20 par laquelle chaque jambe primaire 51 est liée avec le premier organe 31. Les jambes primaires 51 sont ainsi liées au cylindre creux à l'extérieur de ce dernier par l'intermédiaire des liaisons pivot élastiques qui sont situées à leurs extrémités internes 12. De la même façon que pour l'exemple des figures 1 à 5, les jambes primaires 51 sont orientées à l'oblique entre le cylindre creux formant le premier organe 31 et la paroi interne 6 du tube 2 de manière à être en contact au niveau de leur patin primaire 13 avec ladite paroi interne 6. Les jambes primaires 51 sont attachées au premier organe par l'intermédiaire d'une liaison pivot élastique 20 autour d'un axe de pivot X20 qui est sensiblement orthoradial à l'axe principal X2, c'est-à-dire qui est orienté selon un cercle géométrique coaxial avec l'axe principal X2. La liaison pivot élastique 20 de chaque jambe primaire 51 permet en pratique de maintenir le contact entre les patins primaires 13 et la paroi interne 6 par élasticité de la liaison pivot élastique 20, de manière à ce qu'une friction s'exerce entre les patins 13 et la paroi interne 6. Dans ce cas, la liaison pivot élastique 20 assure une fonction comparable à celle obtenue à l'aide du caractère élastiquement déformable en friction de la jambe primaire 5 du dispositif 1 des figures 1 à 5. Le caractère élastique de la liaison pivot 20 permet d'envisager que la jambe primaire 51 soit rigide.

Sur la figure 6 sont illustrés des doigts 141, qui chacun font saillie de l'un des bras radiaux 19. Chaque bras radial 19 est ainsi avantageusement prolongé par un des doigts 141 à proximité de son extrémité libre, et en particulier à l'extérieur du cylindre creux formant le premier organe 31. Chaque doigt 141 est ainsi solidaire du deuxième organe 41 par l'intermédiaire de son bras radial 19 associé, et est conçu pour venir en appui contre l'une des jambes primaires 51, dans la première direction D1, lorsque le deuxième organe est tracté selon la direction D1 par le deuxième effort externe E2. Les doigts 141 forment ainsi des éléments d'entraînement 141 des jambes primaires 51 à l'écart de la paroi interne 6. Selon cette configuration, avant que les bras radiaux 19 ne viennent en contact avec les butées aval 18, les doigts 141 entraînent en rotation, dans la première direction D1, autour de l'axe de pivot X20, les jambes primaires 51 de manière à rompre le contact entre les patins 13 et la paroi interne 6 et ainsi désamorcer la friction ou l'arcboutement des jambes primaires 51. Lorsqu'un effort contraire au deuxième effort externe E2 vient rompre l'appui des doigts 141 sur les jambes primaires 51, celles-ci reviennent dans leur position initiale grâce à l'élasticité des liaisons pivot élastique 20, de sorte que le contact de friction entre les patins primaires 13 et la paroi interne 6 est rétabli.

Sous l'application du premier effort externe E1, le deuxième organe 41 est mis en butée contre la butée amont 17 de sorte que le doigt 141 ne vient pas en appui contre la jambe primaire 51, cette dernière présentant alors une tendance à l'arcboutement, comme dans le cas des premier et deuxième modes de réalisation des figures 1 à 4 et de la figure 5. On conçoit les jambes 51 et la paroi interne 6 pour que :
- sous l'application de l'effort E1, les jambes 51 frottent sur la paroi interne 6 sans s'arc-bouter, et transmettent ainsi une fraction seulement de l'effort E1 au tube 2, et la fraction restante de l'effort E1 au deuxième organe 41, tout en autorisant le déplacement des organes 31 et 41 selon la direction D1, de façon similaire au mode de réalisation des figures 1 à 4, ou
- en variante, on conçoit les jambes 51 et la paroi interne 6 pour que, sous l'application de l'effort E1, les jambes 51 s'arc-boutent contre la paroi interne 6, de sorte que tout déplacement des organes 31 et 41 selon la direction D1 est retenu par le tube 2, de façon similaire au mode de réalisation de la figure 5.

Le dispositif 100 inclut en outre des jambes secondaires 52 disposées à l'oblique par rapport à l'axe principal X2. Tout comme les jambes primaires 51, les jambes secondaires 52 incluent chacune une extrémité interne 12 par l'intermédiaire de laquelle elles sont attachées au premier organe 31, et une extrémité externe formant un patin secondaire 131, qui est en contact de friction avec la paroi interne 6 au niveau d'une surface de friction 131A. Dans le cas des jambes secondaires 52, l'extrémité interne est disposée en aval du patin secondaire 131 en considération de la direction D1, de sorte que les jambes secondaires 52 ont un fonctionnement inverse et symétrique à celui des jambes primaires 51. En l'espèce, lorsqu'un troisième effort externe est appliqué en opposition de la première direction D1 sur le premier organe 31, les jambes secondaires 52 entrent en friction ou s'arc-boutent contre la paroi interne 6 par l'intermédiaire de leur patin secondaire 131, le tube 2 reprenant ainsi au moins une fraction du troisième effort externe par friction ou arc-boutement du patin secondaire 131 de la jambe secondaire 52 contre la paroi interne 6. On conçoit les jambes 52 et la paroi interne 6 pour que :
- sous l'application du troisième effort externe, les jambes 52 frottent sur la paroi interne 6 sans s'arc-bouter, et transmettent ainsi une fraction seulement du troisième effort externe au tube 2, et la fraction restante de cet effort externe au deuxième organe 41, tout en autorisant le déplacement des organes 31 et 41 selon une direction opposée à la direction D1, ou
- en variante, on conçoit les jambes 52 et la paroi interne 6 pour que, sous l'application de l'effort E1, les jambes 51 s'arc-boutent contre la paroi interne 6, de sorte que tout déplacement des organes 31 et 41 selon la direction opposée à la direction D1 est retenu par le tube 2.

En définitive, le dispositif 100 est capable de répartir tout effort externe axial appliqué sur le premier organe 31, quel que soit le sens de cet effort axial, entre le tube 2 et le deuxième organe 41, par mise en friction, ou en arc-boutement, selon la conception adoptée, soit des jambes primaires 51 ou soit des jambes secondaires 52 par l'intermédiaire de leur patin primaire 13 et de leur patin secondaire 131 respectifs. Ainsi le dispositif 100 protège automatiquement, mécaniquement et systématiquement le vérin des efforts appliqués sur le premier organe 31.

Bien entendu, le deuxième organe 41 inclut des doigts 142 qui font chacun saillie de l'un des bras radiaux 19 dans une direction opposée à celle des doigts 141. Ces doigts 142 forment des éléments d'entraînement secondaires des patins secondaires 131, par appui sur les jambes secondaires 52, à l'écart de la paroi interne 6 de manière à réduire la friction desdits patins secondaires 131 sur la paroi interne 6, voire annuler cette friction par un décollement total des patins secondaires 131. En l'espèce, c'est sous l'application d'un quatrième effort externe sur le deuxième organe 41 selon une direction opposée à la direction D1 que cette situation se produit, dans la mesure où l'organe 41 est alors translaté contre la butée amont 17. Les doigts 142 sont alors mis en appui contre les jambes secondaires 52, si bien que friction ou l'arc-boutement de ces dernières est désamorcée.

On comprend que les jambes secondaires ont une structure et une conception qui forment une image miroir ou sensiblement symétrique aux jambes primaires, de sorte que des jambes secondaires symétriques aux jambes primaires 5 représentées aux figures 1 à 5 peuvent être envisagées. Ainsi, en pourvoyant le premier organe 3 d'une jupe flexible secondaire formée de jambes secondaires et orientée symétriquement par rapport à la jupe flexible apparaissant aux figures 1 à 5, on obtient un fonctionnement similaire du dispositif 1 des figures 1 à 4, ou respectivement du dispositif 200 de la figure 5 à celui du dispositif 100 de la figure 6.

Bien entendu, on comprendra que le dispositif 100 inclut une pluralité de bras radiaux 19, de doigts 141, 142, de butées amont 17 et aval 18, de jambes primaires 51, de jambes secondaires 52, qui sont répartis autour de l'axe principal X2.

## Revendications

1. Dispositif de dérivation d'effort (1 ; 100 ; 200), comprenant :
- un tube (2) qui s'étend le long d'un axe principal (X2) et qui présente une paroi interne (6) de friction, et
- un premier organe (3 ; 31) qui est monté coulissant au sein du tube le long de l'axe principal (X2),
**caractérisé en ce que**
la paroi interne (6) de friction est sensiblement cylindrique, et
le dispositif de dérivation d'effort comprend en outre:
- au moins une jambe primaire (5 ; 51) disposée à l'oblique par rapport à l'axe principal (X2), et incluant une extrémité interne (12) par l'intermédiaire de laquelle elle est attachée au premier organe (3 ; 31), et une extrémité externe formant un patin primaire (13), qui est en contact de friction avec la paroi interne, l'extrémité interne étant disposée en amont du patin primaire en considération d'une première direction (D1) parallèle à l'axe principal (X2), de sorte que, lorsqu'un premier effort externe (E1) est appliqué selon la première direction (D1) sur le premier organe (3 ; 31), la jambe primaire entre en friction, ou en arc-boutement, contre la paroi interne par l'intermédiaire de son patin primaire, le tube reprenant ainsi une fraction (F1) seulement du premier effort externe (E1) par friction du patin primaire contre la paroi interne, ou la totalité du premier effort externe (E1) par arc-boutement de la jambe primaire, et
- un deuxième organe (4 ; 41) qui est monté au sein du tube, coulissant le long de l'axe principal (X2), qui est lié en entraînement au premier organe, et qui est solidairement pourvu d'au moins un élément d'entraînement (14 ; 141) pour entraîner le patin primaire de manière à réduire la friction de ce dernier sur la paroi interne, sous l'application d'un deuxième effort externe (E2) sur le deuxième organe selon la première direction (D1), pour désamorcer la friction ou l'arc-boutement de la jambe primaire.

2. Dispositif (1 ; 200) selon la revendication précédente, **caractérisé en ce que** l'élément d'entraînement (14 ; 141) est conçu pour avoir tendance à entraîner, ou pour entraîner, le patin primaire (13) à l'écart de la paroi interne (6) lorsque le deuxième effort externe (E2) est appliqué sur le deuxième organe (4 ; 41).

3. Dispositif (1 ; 200) selon l'une quelconque des revendications précédentes, **caractérisé en ce que** le deuxième organe (4) forme une bague coaxiale avec l'axe principal (X2), l'élément d'entraînement (14) formant une patte qui s'étend sensiblement parallèlement par rapport à l'axe principal (X2), et par l'intermédiaire de laquelle la bague est attachée à la jambe primaire (5).

4. Dispositif (100) selon l'une quelconque des revendications 1 ou 2, **caractérisé en ce que** l'élément d'entraînement (141) est conçu pour venir en appui contre la jambe primaire dans la première direction (D1).

5. Dispositif (100) selon l'une quelconque des revendications précédentes, **caractérisé en ce que** le premier organe (31) forme un cylindre creux qui est coaxial avec l'axe principal (X2), le deuxième organe (41) étant mobile en translation selon l'axe principal (X2) au sein du cylindre creux, ce dernier étant pourvu de deux butées (17, 18) délimitant une course de translation du deuxième organe (41) par rapport au premier organe (31), et par l'intermédiaire desquelles le deuxième organe peut entraîner le premier organe en translation le long de l'axe principal (X2) par rapport au tube (2).

6. Dispositif (1 ; 200) selon l'une quelconque des revendications précédentes, **caractérisé en ce que** la jambe primaire (5) est élastiquement déformable et est montée de façon à pouvoir maintenir le patin primaire (13) en contact avec la paroi interne (6) par élasticité.

7. Dispositif (100) selon l'une quelconque des revendications 1 à 5, **caractérisé en ce que** l'extrémité interne (12) de la jambe primaire (51) comprend une liaison pivot élastique (20) par laquelle elle est attachée avec le premier organe (31), autour d'un axe de pivot (X20) qui est sensiblement ortho-radial à l'axe principal (X2), la liaison pivot élastique permettant de maintenir le patin primaire (13) en contact avec la paroi interne (6) par élasticité.

8. Dispositif (1 ; 100 ; 200) selon l'une quelconque des revendications précédentes, **caractérisé par** au moins deux jambes primaires (5 ; 51) qui sont réparties autour de l'axe principal (X2).

9. Dispositif (100) selon l'une quelconque des revendications précédentes, **caractérisé en ce que** le dispositif (100) comprend au moins une jambe secondaire (52) disposée à l'oblique par rapport à l'axe principal (X2), la jambe secondaire incluant une extrémité interne (12) par l'intermédiaire de laquelle elle est attachée au premier organe (31), et une extrémité externe formant un patin secondaire (131), qui est en contact de friction avec la paroi interne (6), l'extrémité interne étant disposée en aval du patin secondaire en considération de la première direction (D1), de sorte que, lorsqu'un troisième effort externe est appliqué en opposition de la première direction (D1) sur le premier organe, la jambe secondaire entre en friction ou en arc-boutement contre la paroi interne par l'intermédiaire de son patin secondaire, le tube (2) reprenant ainsi une fraction (F2) seulement du troisième effort externe par friction du patin secondaire de la jambe secondaire contre la paroi interne, ou la totalité du troisième effort externe par arc-boutement de la jambe secondaire, le deuxième organe (41) incluant un élément d'entraînement secondaire (142) qui est solidaire du deuxième organe, pour entraîner le patin secondaire de manière à réduire la friction de ce dernier sur la paroi interne (6), sous l'application d'un quatrième effort externe sur le deuxième organe selon une direction opposée à la première direction (D1), pour désamorcer la friction ou l'arc-boutement de la jambe secondaire.

10. Actionneur mécanique comprenant :
- un dispositif de dérivation d'effort (1 ; 100 ; 200) selon l'une quelconque des revendications précédentes, et
- un vérin accouplé au deuxième organe afin de pouvoir entraîner ce dernier le long de l'axe principal (X2) par rapport au tube (2).

## Patentansprüche

1. Vorrichtung zur Kraftumlenkung (1; 100; 200), umfassend:
- ein Rohr (2), das sich entlang einer Hauptachse (X2) erstreckt und das eine Reibungsinnenwand (6) aufweist, und
- ein erstes Organ (3; 31), das innerhalb des Rohres entlang der Hauptachse (X2) gleitend montiert ist,
**dadurch gekennzeichnet, dass**
die Reibungsinnenwand (6) im Wesentlichen zylindrisch ist, und
die Vorrichtung zur Kraftumlenkung weiter umfasst:
- mindestens einen Primärschenkel (5; 51), der schräg in Bezug auf die Hauptachse (X2) angeordnet ist, und ein inneres Ende (12) beinhaltet, über welches er am ersten Organ (3; 31) angebracht ist, und ein äußeres Ende, das eine Primärkufe (13) bildet, die in Reibungskontakt mit der Innenwand ist, wobei das innere Ende unter Annahme einer ersten Richtung (D1) parallel zur Hauptachse (X2) stromaufwärts der Primärkufe angeordnet ist, sodass, wenn eine erste äußere Kraft (E1) entlang der ersten Richtung (D1) an das erste Organ (3; 31) angelegt wird, der Primärschenkel anhand seiner Primärkufe in Reibung oder in Selbsthemmung mit der Innenwand tritt, wobei das Rohr somit nur einen Bruchteil (F1) der ersten äußeren Kraft (E1) durch Reiben der Primärkufe an der Innenwand, oder die Gesamtheit der ersten äußeren Kraft (E1) durch Selbsthemmung des Primärschenkels aufnimmt, und
- ein zweites Organ (4; 41), das innerhalb des Rohres, entlang der Hauptachse (X2) gleitend montiert ist, das mit dem ersten Organ antriebsverbunden ist, und das fest verbunden mit mindestens einem Antriebselement (14; 141) versehen ist, um die Primärkufe derart anzutreiben, um die Reibung dieser letzteren an der Innenwand unter Anlegen einer zweiten äußeren Kraft (E2) an dem zweiten Organ in der ersten Richtung (D1) zu verringern, um die Reibung oder die Selbsthemmung des Primärschenkels zu entschärfen.

2. Vorrichtung (1; 200) nach dem vorstehenden Anspruch, **dadurch gekennzeichnet, dass** das Antriebselement (14; 141) gestaltet ist, um dazu zu neigen, die Primärkufe (13) von der Innenwand (6) weg anzutreiben, oder sie anzutreiben, wenn die zweite äußere Kraft (E2) an dem zweiten Organ (4; 41) angelegt wird.

3. Vorrichtung (1; 200) nach einem der vorstehenden Ansprüche, **dadurch gekennzeichnet, dass** das zweite Organ (4) einen koaxialen Ring mit der Hauptachse (X2) bildet, wobei das Antriebselement (14) eine Lasche bildet, die sich im Wesentlichen parallel in Bezug auf die Hauptachse (X2) erstreckt, und über die der Ring an dem Primärschenkel (5) angebracht ist.

4. Vorrichtung (100) nach einem der Ansprüche 1 oder 2, **dadurch gekennzeichnet, dass** das Antriebselement (141) gestaltet ist, um sich an dem Primärschenkel in der ersten Richtung (D1) anzulegen.

5. Vorrichtung (100) nach einem der vorstehenden Ansprüche, **dadurch gekennzeichnet, dass** das erste Organ (31) einen Hohlzylinder bildet, der koaxial mit der Hauptachse (X2) ist, wobei das zweite Organ (41) in Translation entlang der Hauptachse (X2) innerhalb des Hohlzylinders beweglich ist, wobei letzterer mit zwei Anschlägen (17, 18) versehen ist, die einen Translationsweg des zweiten Organs (41) in Bezug auf das erste Organ (31) beschränken, und über die das zweite Organ das erste Organ in Translation entlang der Hauptachse (X2) in Bezug auf das Rohr (2) antreiben kann.

6. Vorrichtung (1; 200) nach einem der vorstehenden Ansprüche, **dadurch gekennzeichnet, dass** der Primärschenkel (5) elastisch verformbar ist und derart montiert ist, um die Primärkufe (13) durch Elastizität in Kontakt mit der Innenwand (6) zu halten.

7. Vorrichtung (100) nach einem der Ansprüche 1 bis 5, **dadurch gekennzeichnet, dass** das innere Ende (12) des Primärschenkels (51) eine elastische Schwenkverbindung (20) umfasst, über die es mit dem ersten Organ (31) um eine Schwenkachse (X20) herum angebracht ist, die im Wesentlichen orthoradial zur Hauptachse (X2) ist, wobei die elastische Schwenkverbindung es ermöglicht, die Primärkufe (13) durch Elastizität in Kontakt mit der Innenwand (6) zu halten.

8. Vorrichtung (1; 100; 200) nach einem der vorstehenden Ansprüche, durch mindestens zwei Primärschenkel (5; 51) gekennzeichnet, die um die Hauptachse (X2) herum verteilt sind.

9. Vorrichtung (100) nach einem der vorstehenden Ansprüche, **dadurch gekennzeichnet, dass** die Vorrichtung (100) mindestens einen Sekundärschenkel (52) umfasst, der schräg in Bezug zur Hauptachse (X2) angeordnet ist, wobei die Sekundärachse ein inneres Ende (12) beinhaltet, über das sie an dem ersten Organ (31) angebracht ist, und ein äußeres Ende, das eine Sekundärkufe (131) bildet, die in Reibungskontakt mit der Innenwand (6) ist, wobei das innere Ende unter Annahme einer ersten Richtung (D1) stromabwärts der Sekundärkufe angeordnet ist, sodass, wenn eine dritte äußere Kraft entgegengesetzt zur ersten Richtung (D1) an das erste Organ angelegt wird, der Sekundärschenkel anhand seiner Sekundärkufe in Reibung oder in Selbsthemmung mit der Innenwand tritt, wobei das Rohr (2) somit nur einen Bruchteil (F2) der dritten äußeren Kraft durch Reiben der Sekundärkufe an der Innenwand, oder die Gesamtheit der dritten äußeren Kraft durch Selbsthemmung des Sekundärschenkels aufnimmt, wobei das zweite Organ (41) ein Sekundärantriebselement (142) beinhaltet, das fest mit dem zweiten Organ verbunden ist, um die Sekundärkufe derart anzutreiben, um die Reibung dieser letzteren an der Innenwand (6) unter Anlegen einer vierten äußeren Kraft an dem zweiten Organ entlang einer Richtung entgegengesetzt zur ersten Richtung (D1) zu verringern, um die Reibung oder die Selbsthemmung des Sekundärschenkels zu entschärfen.

10. Mechanischer Aktor, umfassend:
- eine Vorrichtung zur Kraftumlenkung (1; 100; 200) nach einem der vorstehenden Ansprüche, und
- einen Zylinder, der an dem zweiten Organ angekoppelt ist, um letzteres entlang der Hauptachse (X2) in Bezug auf das Rohr (2) antreiben zu können.

## Claims

1. A device for deriving a force (1; 100; 200), comprising:
- a tube (2) which extends along a main axis (X2) and which has a friction inner wall (6),
- a first member (3; 31) which is slidably mounted within the tube along the main axis (X2),
**characterized in that**
the friction inner wall (6) is substantially cylindrical, and the force deriving device further comprises:
- at least one primary leg (5; 51) disposed obliquely relative to the main axis (X2), and including an inner end (12) via which it is attached to the first member (3; 31), and an outer end forming a primary pad (13), which is in frictional contact with the inner wall, the inner end being disposed upstream of the primary pad in consideration of a first direction (D1) parallel to the main axis (X2), so that, when a first outer force (E1) is applied on the first member (3; 31) according to the first direction (D1), the primary leg enters in friction or in bracing, against the inner wall, via its primary pad, the tube thus taking up only a fraction (F1) of the first outer force (E1) by friction of the primary pad against the inner wall, or the entire first outer force (E1) by bracing the primary leg, and
- a second member (4; 41) which is mounted within the tube, sliding along the main axis (X2), which is drivingly connected to the first member, and which is securely provided with at least one driving element (14; 141) to drive the primary pad so as to reduce the friction of the latter on the inner wall, under the application of a second outer force (E2) on the second member according to the first direction (D1), to defuse the friction or the bracing of the primary leg.

2. The device (1; 200) according to the preceding claim, **characterized in that** the driving element (14; 141) is designed to have a tendency to drive, or to drive, the primary pad (13) away from the inner wall (6) when the second outer force (E2) is applied on the second member (4; 41).

3. The device (1; 200) according to any one of the preceding claims, **characterized in that** the second member (4) forms a ring coaxial with the main axis (X2), the driving member (14) forming a tab which extends substantially parallel relative to the main axis (X2), and via which the ring is attached to the primary leg (5).

4. The device (100) according to any one of claims 1 or 2, **characterized in that** the driving element (141) is designed to bear against the primary leg in the first direction (D1).

5. The device (100) according to any one of the preceding claims, **characterized in that** the first member (31) forms a hollow cylinder which is coaxial with the main axis (X2), the second member (41) being movable in translation according to the main axis (X2) within the hollow cylinder, the latter being provided with two abutments (17, 18) delimiting a translational stroke of the second member (41) relative to the first member (31), and via of which the second member can drive the first member in translation along the main axis (X2) relative to the tube (2).

6. The device (1; 200) according to any one of the preceding claims, **characterized in that** the primary leg (5) is elastically deformable and is mounted so as to be able to hold the primary pad (13) in contact with the inner wall (6) by elasticity.

7. The device (100) according to any one of claims 1 to 5, **characterized in that** the inner end (12) of the primary leg (51) comprises an elastic pivot connection (20) by which it is attached with the first member (31), about a pivot axis (X20) which is substantially ortho-radial to the main axis (X2), the elastic pivot connection allowing the primary pad (13) to be held in contact with the inner wall (6) by elasticity.

8. The device (1; 100; 200) according to any one of the preceding claims, **characterized by** at least two primary legs (5; 51) which are distributed about the main axis (X2).

9. The device (100) according to any one of the preceding claims, **characterized in that** the device (100) comprises at least one secondary leg (52) disposed obliquely relative to the main axis (X2), the secondary leg including an inner end (12) via which it is attached to the first member (31), and an outer end forming a secondary pad (131), which is in frictional contact with the inner wall (6), the inner end being disposed downstream of the secondary pad in consideration of the first direction (D1), so that, when a third outer force is applied on the first member in opposition to the first direction (D1), the secondary leg enters in friction or in bracing against the inner wall via its secondary pad, the tube (2) thus taking up only a fraction (F2) of the third outer force by friction of the secondary pad of the secondary leg against the inner wall, or the entire third outer force by bracing of the secondary leg, the second member (41) including a secondary driving element (142) which is secured to the second member, to drive the secondary pad so as to reduce the friction of the latter on the inner wall (6), under the application of a fourth outer force on the second member according to a direction opposite to the first direction (D1), to defuse the friction or the bracing of the secondary leg.

10. A mechanical actuator comprising:
- a force deriving device (1; 100; 200) according to any one of the preceding claims, and
- an actuator coupled to the second member in order to be able to drive the latter along the main axis (X2) relative to the tube (2).
